# EUROPEAN PATENT APPLICATION

(11) **EP 4 538 176 A1**
(43) Date of publication of application: **16.04.2025**
(21) Application number: 24188348.7
(22) Date of filing: 12.07.2024
(51) Int. Cl.: B64D 11/00

(54) **CURVED SEATBACK MONITORS AND ASSOCIATED SYSTEMS, DEVICES, AND METHODS**

(30) Priority: 10.10.2023 US 202363589205 P; 17.04.2024 US 202418638610
(71) Applicant: Panasonic Avionics Corporation, Irvine, CA 92612 (US)
(72) Inventor: MASSON, Andrew, Irvine, 92612 (US); PATEL, Dharmesh, Irvine, 92612 (US); GLEASON, Robert Connor, Irvine, 92612 (US); IZADYAR, Mehdi, Irvine, 92612 (US); CISNEROS, Omar Lopez, Irvine, 92612 (US); BENNETT, Mark, Irvine, 92612 (US); MA, Nicholas, Irvine, 92612 (US)
(74) Representative: Barker Brettell LLP

(57) **Abstract**

Curved seatback monitors or display screens, and associated systems, devices, and methods for providing wide view display monitor technology on a commercial passenger vehicle are disclosed herein. An in-flight entertainment and communication (IFEC) system can be installed on a passenger vehicle having an aisle, window seats along a first side of the aisle, and center seats along a second side of the aisle. In some embodiments, the IFEC system includes a plurality of display screens positioned in front of corresponding ones of the seats. Each display screen can include a first portion having a first curvature radius and a second portion having a second curvature radius greater than the first curvature radius. The second portions of the display screens can be positioned closer to the aisle than the first portions. The curved display screens and the arrangement thereof are expected to improve passenger experience.

## Description

### CROSS-REFERENCE TO RELATED APPLICATION(S)

This application claims the benefit of U.S. Provisional Patent Application No. 63/589,205 filed October 10, 2023, which is incorporated herein by reference in its entirety.

### TECHNICAL FIELD

This document is generally related to curved seatback monitors and associated systems, devices, and methods for providing wide view display monitor technology on a commercial passenger vehicle.

### BACKGROUND

Most modern commercial passenger vehicles include communication and display electronics, commonly referred to as in-flight entertainment and communication (IFEC) devices.

### BRIEF DESCRIPTION OF THE DRAWINGS

Features, aspects, and advantages of the presently disclosed technology may be better understood with regard to the following drawings.
FIG. 1 schematically illustrates an in-flight entertainment and communication (IFEC) system installed in an airplane based on some implementations of the disclosed technology.
FIG. 2 is a top-down view of a window seat based on some implementations of the disclosed technology.
FIGS. 3A-3F are perspective views of seats based on some implementations of the disclosed technology.
FIG. 4 is an enlarged rear perspective view of a passenger cabin based on some implementations of the disclosed technology.
FIGS. 5A and 5B are enlarged plan views of another passenger cabin based on some implementations of the disclosed technology.
FIG. 6 is a flowchart illustrating a method for arranging and installing display screens on a commercial vehicle based on some implementations of the disclosed technology.

A person skilled in the relevant art will understand that the features shown in the drawings are for purposes of illustrations, and variations, including different and/or additional features and arrangements thereof, are possible.

### DETAILED DESCRIPTION

After experiencing a reduction in world-side travel due to the COVID pandemic, airlines are now experiencing an increase in commercial airlines traffic. At the same time, the last few years have also seen an explosive growth in the prevalence and use of personal electronic devices, and the ability of passengers to carry their own content onboard airplanes. As a result of such changes, passengers are increasingly looking for entertainment and connectivity during travel of higher standards. At the same time, passengers also are looking for more privacy from co-passengers.

Currently, many different types and models of aircrafts are in commercial use. Numerous variations exist in the shape and curvilinear nature of back side of seats that can be used for affixing a flexible monitor for viewing by a passenger in a previous row. The present document discloses, among other things, techniques that allow for a simpler installation of flexible displays on commercial passenger vehicle. Although an aircraft or airlines that operates an aircraft are used for highlighting the usefulness of the disclosed embodiments, a person of skill in the art will understand that similar deployment may also be made on other commercial passenger vehicles such as coach buses, for-hire vehicles, trains, and so on.

The present document discloses techniques that allow for presenting a richer multimedia and travel experience to passengers. The document discloses, among other things, various designs of flexible or curved seatback display screens that provide a greater amount of viewing screen real estate to airlines passengers. For example, each display screen can be entirely curved or curvilinear such that it includes one or more curved portions and one or more flat portions. The curvature, positioning, and orientation of the display screens may also be used to increase the level of privacy between neighboring passengers.

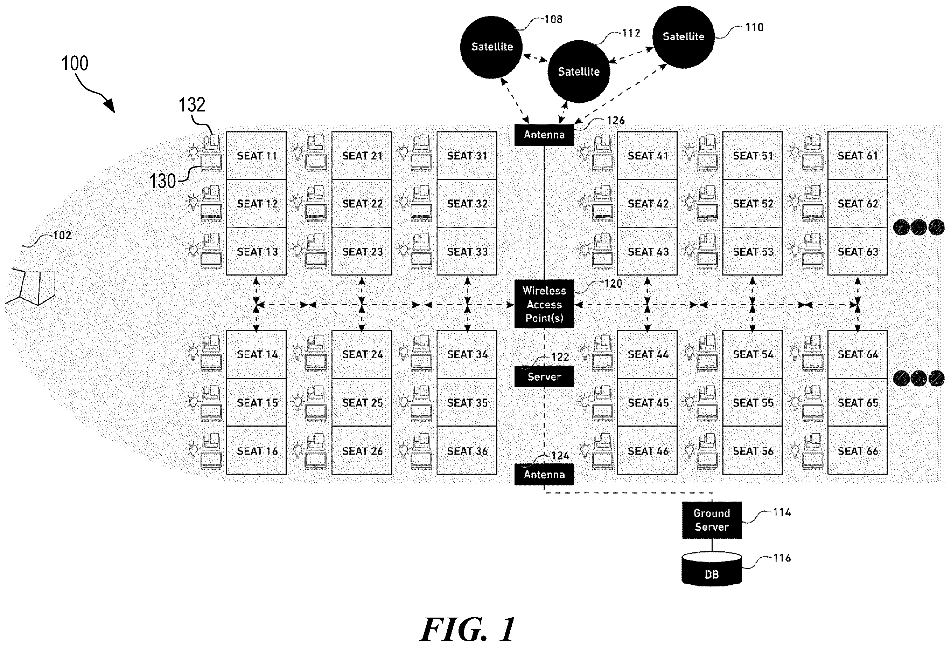

FIG. 1 shows an example of an in-flight entertainment and communication (IFEC) system 100 installed in an airplane 102. The IFEC system 100 provides various entertainment and connectivity services to passengers on board via one or more IFEC devices 130 dedicated to each seat. In the illustrated implementation, the IFEC system 100 includes a server 122, antenna 126, and antenna 124. The components shown as a single element in FIG. 1 (e.g., the server 122, the wireless access point 120, etc.) can be configured in multiple elements. For example, the in-flight service system can include multiple wireless access points to facilitate or support providing wireless coverages for the passengers. The passengers can carry their own personal electronic devices (PEDs) 132 and/or other devices. The PEDs 132 may refer to any electronic computing device that includes one or more processors or circuitries for implementing the functions related to data storage, video and audio streaming, wired communications, wireless communications, etc. Examples of the PEDs 132 include cellular phones, smart phones, tablet computers, laptop computers, and other portable computing devices. In some implementations, the PEDs 132 may have the capability to execute application software programs ("apps") to perform various functions.

In FIG. 1, the airplane 102 is depicted to include multiple passenger seats, individually labeled Seat11 to Seat 66. The IFEC devices 130 are provided at each passenger seat and configured with capabilities for video and audio streaming, Internet communications, and other capabilities. In some implementations, the IFEC devices 130 are provided at each passenger seat, such as at each of the seatbacks of the passenger seats, on cabin walls, and/or deployable from an armrest for seats located at a bulkhead (i.e., in the first row of a section). The IFEC devices 130 can include displays providing interfaces to each passenger through which each passenger enters his or her selections on the entertainment option, e.g., the particular selections, emergency requests, etc. Upon receiving the selection from the passengers, based on the selections from the passengers, the IFEC devices 130 can display entertainment content and travel information. In some implementations, the IFEC devices 130 can operate in a check-in mode which is separate from an entertain mode that receives the selections on the entertainment options from passengers and provides corresponding entertainment content. The IFEC devices 130 can operate in the check-in mode until the passengers complete the onboard check-in process after getting on board and operate in the entertain mode after the passengers complete the onboard check-in. To encourage the passengers to complete the onboard check-in process, various graphic user interface (GUI) functions can be suggested and displayed on the IFEC devices 130. The PEDs 132 may be operably coupled to the IFEC devices 130 to transfer power, data, etc.

The server 122 is communicably coupled with the IFEC devices 130 and the PEDs 132 and perform various operations including processing requests/inputs from passengers and providing data to passengers. The communications between the server 122, the IFEC devices 130, and/or the PEDs 132 are either realized by wired connections or wireless connections. In some implementations, the communication between the server 122, the IFEC devices 130, and/or the PEDs 132 are achieved through the antenna 124 to and from the ground-based cell towers by, for example, a provision of network plugs at the seat for plugging the PEDs 132 to a wired onboard local area network. In some implementations, the communications between the server 122, the IFEC devices 130, and/or the PEDs 132 are achieved through the antenna 126 to and from satellites 108, 110, 112 in an orbit (e.g., via a cellular network utilizing one or more onboard base station(s), Wi-Fi utilizing the wireless access point 120, and/or Bluetooth).

In some implementations, a crew terminal is provided in the airplane 102 utilized by a ground crew, a cabin crew, or a flight crew to access the IFEC maintenance functions such as loading new content, replenishing multimedia content digital rights management (DRM) keys, and so on. The crew terminal can be in communication with other devices of the IFEC system 100 such as the server 122, the IFEC devices 130, the PEDs 132, and/or the ground server 114. In some implementations, the crew terminal can be implemented as a part of the server 122. In some implementations, the crew terminal is in communication with the gate terminal to facilitate the boarding process. In some implementations, the gate terminal and the onboard crew terminal store apps to support the boarding process. For example, the applications may store instructions to start, proceed, stop, and finish the boarding process by detecting certain conditions. The gate terminal and the crew terminal are typically accessed by a gate agent or a crew member responsible for overseeing boarding operation. User ID and passwords may be required to authorize the access to the gate terminal and the onboard crew terminal to facilitate identifying of the agent or crew member conducting the boarding operation and to prevent unauthorized access to the system.

The server 122, the IFEC devices 130, and the PEDs 132 can form a local network onboard the airplane 102 through an onboard router (not shown). The server 122 is also communicably coupled with the ground server 114 through the antenna 126 for receiving and transmitting information from/to the ground server 114. The ground server 114 can be located at various locations, including a gate where passengers check-in the boarding pass right before passengers are on board, a computer center at an arbitrary location on the ground, etc. In some examples, the gate terminal may correspond to the ground server 114 located at the gate and thus can be one example of the ground server 114. The ground server 114 may be in communication with the database 116 and provide information from the database 116 to the server 122 and store information received from the server 122 in the database 116. Although FIG. 1 shows that the database 116 is provided separately from the ground server 114, the database 116 can be provided as a part of the ground server 114.

Although not shown in FIG. 1, the IFEC system 100 may further include a database which stores passenger information, for example, profiles of the passengers (name, age, etc.), preferred entertainment options (movies, music, shows, etc.), preferred entertainment content (e.g., genres of movies), etc. The passenger information can be obtained in multiple manners and is stored in the database of the IFEC system 100. In some implementations, the passenger information is obtained prior to the passengers coming on board (e.g., at the time of purchasing the tickets or checking in for the flights), or at other times. In some implementations, the passenger information can be obtained and shared by an association of several airplane companies and retrieved from the database 116. In some implementations, the passenger information can be updated during the trip. One such database may include configuration (make/model) of various seats installed on the airplane 102. This database may be used by an installer to adapt a curved screen to the backside of a seat.

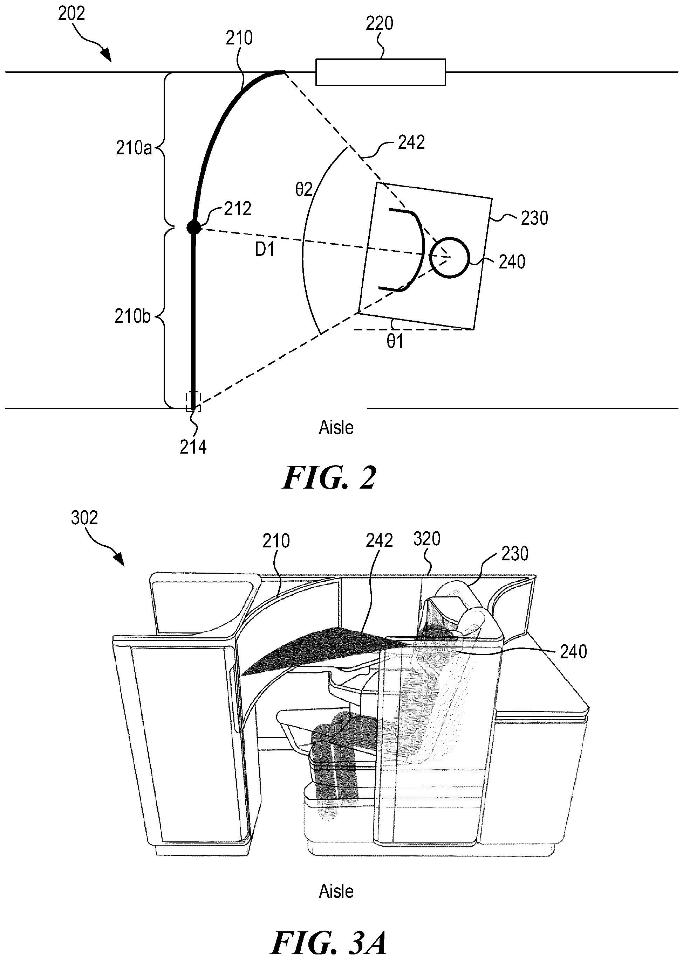

FIG. 2 is a top-down view of a window seat 202 based on some implementations of the disclosed technology. As shown, the window seat 202 can include a display screen 210 (e.g., included among one or more IFEC devices 130), a window 220, and a seat 230 for a passenger 240 to sit on. The window seat 202 can include other structures or components not illustrated, such as a sliding door for privacy, additional IFEC devices (e.g., a remote control), storage space, etc.

The display screen 210 can be mounted on one or more walls or partitions forming the boundaries of the window seat 202, on a shelf included in the window seat 202, etc. In some implementations, the display screen 210 includes a curved portion 210a and a flat portion 210b (e.g., having a curvature radius of infinity). The curved portion 210a can comprise 5%, 10%, 20%, 30%, 40%, 50%, 60%, 70%, 80%, 90%, 95%, or 5-95% of the length of the display screen 210. In the illustrated embodiment, the curved portion 210a comprises about half of the display screen 210 and is positioned towards the window 220, and the flat portion 210b comprises about half of the display screen 210 and is positioned towards the aisle. The curved portion 210a can be concave or convex relative to the seat 230. Positioning the flat portion 210b towards the aisle can prevent the display screen 210 from blocking the passageway between the window seat 202 and the aisle for passenger entry and egress. In particular, an edge portion 214 of the display screen 210 is shown oriented substantially perpendicular to the aisle. In other implementations, the edge portion 214 of the display screen 210 can be oriented at other angles relative to the aisle. Moreover, in other implementations, the curved portion 210a can be positioned towards the aisle and the flat portion 210b can be positioned towards the window 220. In some implementations, the display screen 210 includes only one or more curved portions 210a and does not include a flat portion. In some implementations, the display screen 210 includes multiple curved portions 210a separated by one or more flat portions 210b, such as two curved portions 210a on either side of the flat portion 210b. In some implementations, the display screen 210 can be curved along a vertical axis such that the curved portion 210a is, for example, above the flat portion 210b.

As shown in FIG. 2, the seat 230 can be angled relative to the aisle by a first angle θ1 to, for example, face a center 212 of the display screen 210. The first angle θ1 can be an acute angle. In other implementations, the seat 230 is not angled and is instead oriented parallel to the aisle. In such implementations, the seat 230 can be positioned to be horizontally aligned with the center 212 of the display screen 210. The seat 230 can be positioned at a distance D1 away from the display screen 210. The screen size of the display screen 210, the first angle θ1, and the distance D1 can define a field of view 242 having a second angle θ2 representing the lateral viewing angle of the display screen 210 for the passenger 240. The second angle θ2 can be an acute angle, a right angle, or an obtuse angle. In some implementations, the second angle θ2 is sufficiently large (e.g., 140-160°) such that the display screen 210 can be partitioned into two or more portions dedicated to displaying different information. For example, let and/or right side portions of the display screen 210 can be dedicated to display secondary content or information (e.g., menus, weather, itineraries, schedule, maps, etc.) while the remaining portion (e.g., at the center) of the display screen 210 displays primary content or information that is distinct from the first content (e.g., movies, TV shows, flight tracking, etc.). Thus, the display screen 210 can simultaneously display two or more types of information.

The display screen 210 can have various dimensions (e.g., screen size, aspect ratios). Also, the display screen 210 can include various display technologies such as LCD (Liquid Crystal Display), LED (Light-Emitting Diode), OLED (Organic Light-Emitting Diode), QLED (Quantum Dot Light-Emitting Diode), Mini-LED, Micro-LED, etc. In some implementations, the display screen 210 (or portions thereof) can be rendered at least partially transparent. For example, the transparency of the display screen 210 can be electrically controllable to provide effectively full transparency (e.g., less than 10% opacity), effectively full opacity (e.g., greater than 90% opacity), or any opacity therebetween. In some implementations, the display screen 210 is positioned to at least partially cover the window 220 and the transparency of the display screen 210 can be controlled to reveal or hide portions of the window 220.

FIG. 3A is a perspective view of a center seat 302 based on some implementations of the disclosed technology. Like in the window seat 202 illustrated in FIG. 2, the display screen 210 is positioned and oriented such that the display screen 210 curves away from the aisle and is substantially normal to the aisle near the aisle. In contrast to the window seat 202, however, the center seat 302 has a partition wall 320 separating the center seat 302 from an adjacent center seat (not shown). Also, FIG. 3A illustrates the display screen 210 as a fully curved screen without a flat portion. However, it will be appreciated that in some implementations, the display screen 210 in the center seat 302 can also have a flat portion 210b.

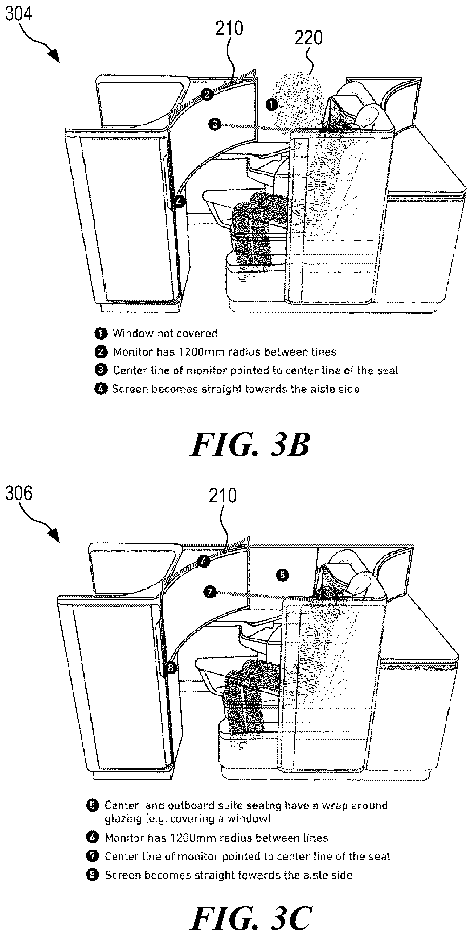

FIG. 3B is a perspective view of a window seat 304 based on some implementations of the disclosed technology. As shown, the window is not covered by any of the wall partitions or the display screen. The display screen and the seat can be positioned and oriented such that a center line of the display screen points to a center line of the seat. Moreover, the screen becomes straight towards the aisle side.

FIG. 3C is a perspective view of a center or outboard suite seat 306 based on some implementations of the disclosed technology. As shown, the seat 306 includes a wraparound glazing that, for example, covers a window. The display screen and the seat can be positioned and oriented such that a center line of the display screen points to a center line of the seat. Moreover, the screen becomes straight towards the aisle side.

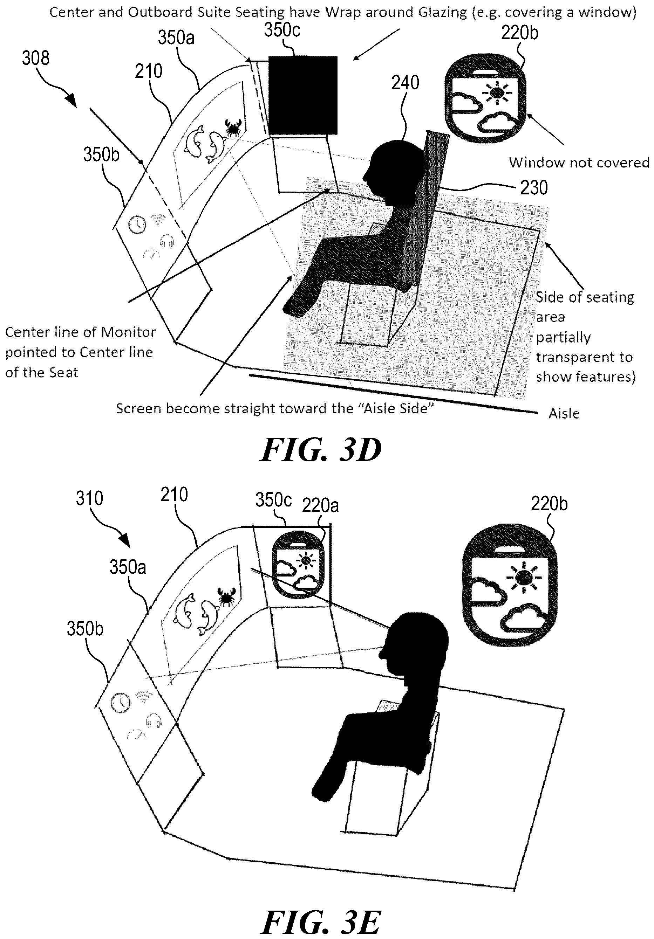

FIG. 3D is a perspective view of a window seat 308 based on some implementations of the disclosed technology. As shown, the seat 308 includes a display screen 210 having three portions (separated by dotted lines for illustrative purposes): a front-center portion 350a having a first curvature radius, a front-left portion 350b having a second curvature radius, and a front-right portion 350c having a third curvature radius. The front-center portion 350a can be used for displaying main content such as movies, TV shows, flight tracking, etc. Also, the center line of the display screen 210 can point to the center line of the seat 230 such that the front view of the passenger 240 matches or aligns with the front-center portion 350a.

The front-left portion 350b can be used for displaying secondary content such as the time, wireless connection status, temperature, volume controls, etc. The second curvature radius can be infinity such that the front-left portion 350b is substantially flat and the display screen 210 becomes straight towards the aisle. This can allow entry and egress of the passenger between the aisle and the seat. The front-right portion 350c can be positioned between a first window (obscured from view) and the passenger on the seats, and can comprise a wraparound glazing that selectively occludes the window. For example, the transparency of the front-right portion can be adjusted between X and Y percent via a controller (typically full transparency at 10% and full opacity at 90%). However, the front-right portion does not extend to cover a second window 220b, leaving the second window 220b uncovered. In some implementations, the transparency of each portion can be independently controlled by the passenger, automatically in response to sensor readings, and/or in response to other controls.

FIG. 3E is a perspective view of a window seat 310 based on some implementations of the disclosed technology (e.g., in a suite configuration). The window seat 310 can be similar to the window seat 308 illustrated in FIG. 3D. For example, as shown, the display screen 210 can have the three portions. In the illustrated implementation, the transparency of the front-right portion 350c is set at a level to at least partially reveal the first window 220a. Electronics such as multimedia storage and power supplies may be tucked in the space between a flat separating wall and the curved monitor, as is visible on the right hand side behind the screen. In various embodiments, the screen may be sufficiently wide to occupy at least 90 percent of a passenger's field of vision. Typical humans have a meaningful field of vision of 140 degrees, with approximately 30 8egreees considered to be the least amount of field of vision to provide a meaningful experience on a display screen. Most people are used to working on computer monitors at about 70 degrees spread in their field of vision. Therefore, the embodiments disclosed in the present document provide at least 70, or preferably at least 90 degrees, and more preferably 140 to 160 degree field of vision such that the 30 degree screen space on the right and left side may be used to display other meaningful information (e.g., menus, weather, travel, map, etc.) in addition to video.

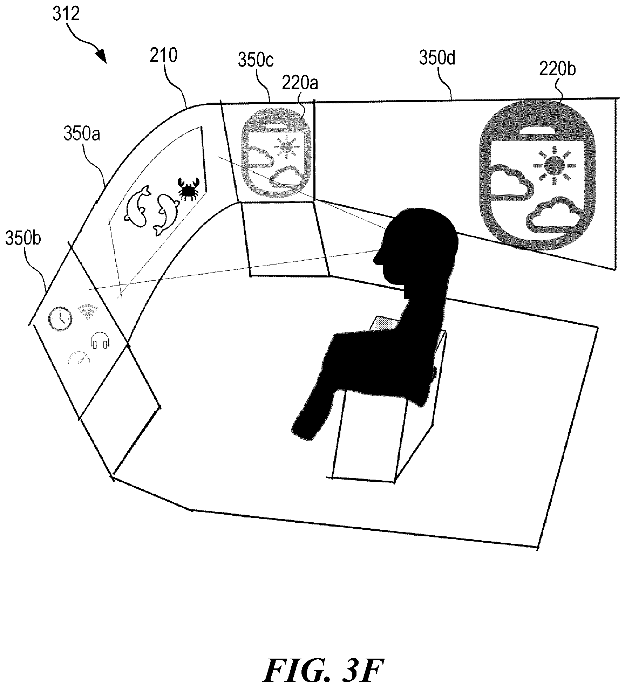

FIG. 3F is a perspective view of a window seat 312 based on some implementations of the disclosed technology. The display screen 210 in the window seat 312 can include the front-center portion 350a, the front-left portion 350b, and the front-right portion 350c. The display screen 210 can additionally include a side portion (e.g., a fourth portion) 350d that extends from the front-right portion 350c, across the side of the window seat 312 and thus the passenger cabin, and over the second window 220b. In the illustrated implementation, the transparency of each of the front-right portion 350c and the side portion 350d is set to an intermediate value (e.g., 50%) to partially reveal the first window 220a and the second window 220b, respectively.

As discussed above, the transparency of each of the portions can be controlled manually or automatically (e.g., based on user inputs and/or sensor outputs). The transparency may also be adjusted to, for example, reduce glare or reflections on the display screen 210 or portions thereof. In some implementations, the display screens 210 on an airplane (or portions thereof) are controllable by crew members to, for example, adjust their transparency during take-off and landing such that crew members can more easily confirm passenger status (e.g., check whether they are sitting in their seats, check whether the seat trays are up, check other passenger activities, etc.).

In some implementations, the display screen 210 can have fewer or more portions that may extend over other areas, such as above the front-center portion 350a, the portion of the ceiling of the passenger cabin that is over the window seat 312, towards the floor within the window seat 312, etc. The various portions can form a continuous, smooth screen. Also, a passenger seat can have more than one display screen 210 that are arranged spaced apart or adjacent to one another.

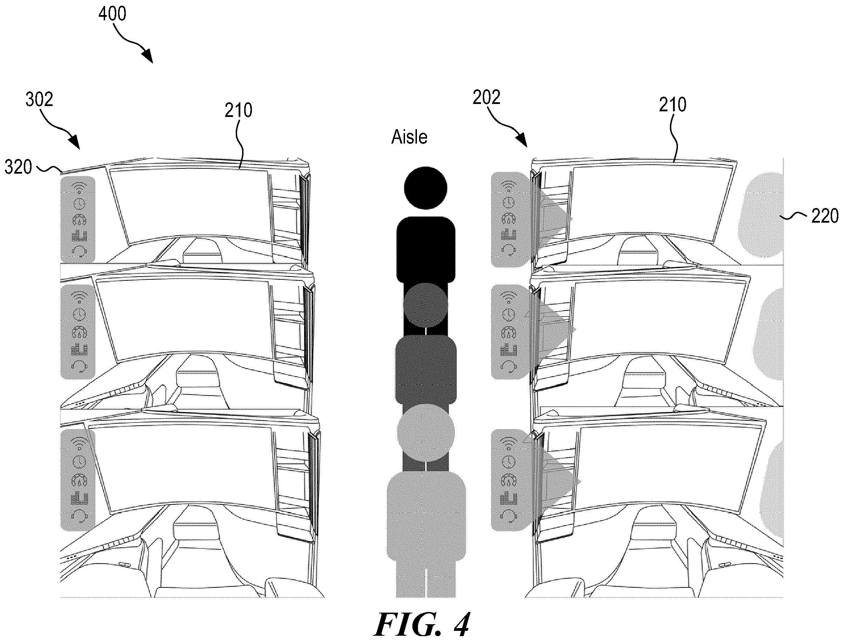

FIG. 4 is an enlarged rear perspective view of a passenger cabin 400 based on some implementations of the disclosed technology. A plurality of the window seats 202 is arranged in rows on one side of an aisle, and a plurality of the center seats 302 is arranged in rows on the other side of the aisle. The seat pitch (e.g., the distance between seats in the same column and in different rows) can be 28 inches, 32 inches, 36 inches, 40 inches, 50 inches, 60 inches, 80 inches, 28-80 inches, or any distance therebetween (e.g., 34 inches). In the illustrated embodiment, each of the display screens 210 is fully curved without a flat portion. Also, the display screens 210 are each oriented to be symmetrical in the direction of the aisle, and does not curve away from the aisle as shown in FIGS. 2 and 3. However, it will be appreciated that in some implementations, the display screens 210 can also have flat portions, and can be oriented at different angles relative to the aisle.

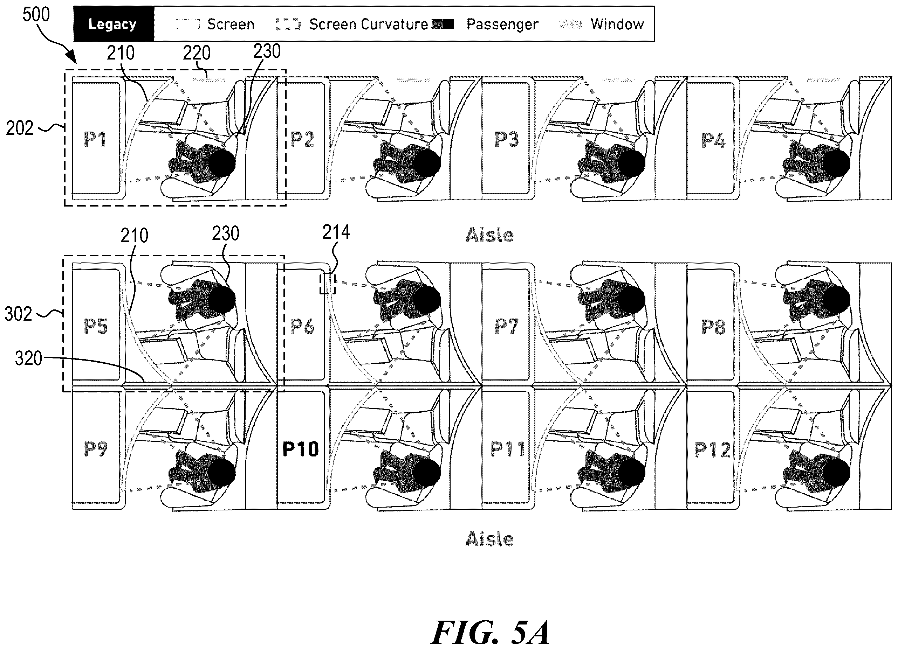

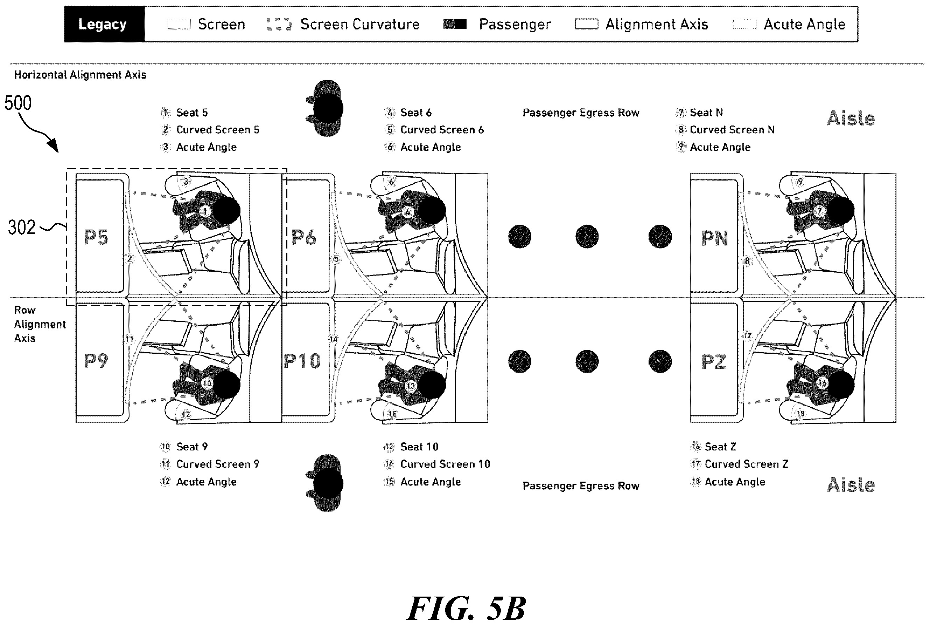

FIGS. 5A and 5B are enlarged plan views of another passenger cabin 500 based on some implementations of the disclosed technology. The passenger cabin 500 can include two columns of window seats 202 (one of which is omitted for illustrative purposes; seats P1-P4)) and two columns of center seats 302 (seats P5-P12) for a total of four seat columns. While each of the display screens 210 is illustrated to be fully curved, it will be appreciated that the display screens 210 can have flat portions as illustrated in FIG. 2.

In the illustrated implementation, each of the seats 230 is angled by an acute angle (e.g. by the first angle θ1 illustrated in FIG. 2) from the alignment axis and away from the adjacent aisles, and each of the display screens 210 curves away from the adjacent aisles. For the plurality of center seats 302, each of which is positioned immediately adjacent to another center seat 302 of the same row without an aisle therebetween, the illustrated position, orientation, and curvature of the display screens 210 can provide a level of privacy. For example, because the display screens 210 curve away from the adjacent aisles and toward the partition walls 320, a passenger in one of the center seats 302 who stands up may have reduced visibility of the display screen 210 in the other center seat 302 of the same row compared to if, for example, the display screens were flat and oriented substantially perpendicular to the aisles. In some implementations, additional layers of privacy can be provided by, for example, including privacy filters on the display screens 210, including doors on each of the window seats 202 and center seats 302, etc.

In some implementations, the position and/or orientation of the display screens 210 can be in configurations other than the illustrated implementation of FIGS. 5A and 5B and/or can be adjustable by the passengers. For example, the display screens 210 can be positioned and oriented to curve toward the aisle (e.g., the display screens 210 in the window seats 202 may face the windows 220) such that passengers and crew members walking in the aisles have reduced visibility of the display screens 210.

Curved or curvilinear screens, as disclosed herein, are expected to improve passenger experience. For example, curved or curvilinear screens can provide a greater viewing angle compared to flat screens of the same screen size. A greater viewing angle can be preferred when, for example, watching movies in-flight. The curvature of the screens, and the positions, orientations, and arrangements thereof can also provide additional levels of privacy, as discussed above. Moreover, while implementation of the disclosed technology are primarily discussed in the context of commercial airplanes, the screens and the arrangement thereof discussed herein can be implemented in other vehicles such as private jets, buses, boats, trains, etc.

In some embodiments, the various angles and curvature embodiments disclosed herein may apply to screen curvature in a vertical direction that is perpendicular to the horizontal field of vision of a user. For example, a curved screen may extend from top to bottom, from a viewer's perspective. Such a design may be helpful to, for example, provide a seamless viewing experience to a user in a range of angle or recline. In some embodiments, the curved screen may comprise multiple segments, each defined by its own curve geometry. In some embodiments, at least some of these segments may be made of display material that is flexible such that, during installation, the curved screen may be curved to conform to a surface below it. In some embodiments, ergonomic design of a surrounding of a passenger seat may take into account the various viewing angles disclosed here to configure a screen to conform to this viewing space. With respect to the video being displayed on the curved screen, in some embodiments, special video display processing may be used to compensate for viewing distortions such as keystone effect. In some embodiments, when video source material has a specific video display ratio (e.g., 16:9), the remaining portion of a screen may be used to display other information to the user. This other information may include weather or flight path map. In some embodiments, a passenger may be able to configure the portion of the screen for display of video content and display of other information, e.g., by performing a finger swipe to move display windows around the screen that would be wider or taller than the video content.

In some embodiments, a bracket may be provided to allow users to tile the curved display in a preferred direction such as up, down, left or right. Such an adjustment could be used by passengers with different heights, resulting in different eye levels, to conveniently adjust the display to their best field of vision. In some embodiments, the curved display may be provided with a privacy coating to allow privacy by making it difficult to view the content being viewed by a passenger from another angle. In some embodiments, the amount of privacy introduced by the coating (e.g., by thickness of the coating or by material composition of the coating) may change along the curvature of the screen to take into account that the curved portion of the screen may be more visible to other passenger seats and to passengers walking in aisle. For example, less privacy coating may be used at the center of a display that is only in the field of vision of a user, while greater privacy coating may be provided to screen area away from the center of the screen.

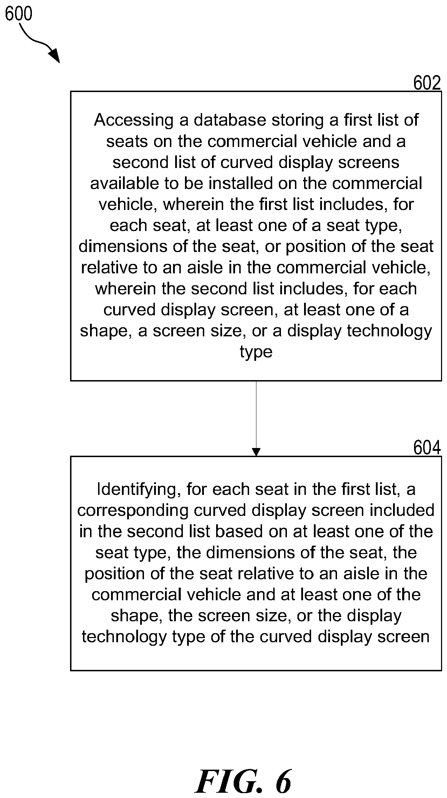

FIG. 6 is a flowchart illustrating a method 600 for arranging and installing display screens on a commercial vehicle (e.g., the airplane 102) based on some implementations of the disclosed technology. While the method 600 is described below in a particular order, it will be appreciated that one or more portions of the method 600 can be performed in a different order, one or more portions of the method 600 can be omitted, and/or the method 600 can include additional steps in accordance with implementations of the present technology.

The method 600 begins at block 602 by accessing a database storing a first list of seats on the commercial vehicle and a second list of curved display screens available to be installed on the commercial vehicle. The first list can include, for each seat, at least one of a seat type, dimensions of the seat, or position of the seat relative to an aisle in the commercial vehicle. The second list can include, for each curved display screen, at least one of a shape, a screen size, or a display technology type.

At block 604, the method 600 continues by identifying, for each seat in the first list, a corresponding curved display screen included in the second list based on at least one of the seat type, the dimensions of the seat, the position of the seat relative to an aisle in the commercial vehicle and at least one of the shape, the screen size, or the display technology type of the curved display screen.

In some implementations, the method 600 can continue by installing the identified curved display screens at the corresponding seats such that the curved display screens curve away from adjacent aisles.

Referring back to FIGs. 2-5B, the seats can be angled relative to the aisles by at least 5°, 10°, 20°, 30°, 40°, 50°, or 5-50°, or any angle therebetween (e.g., 15°). In other implementations, the seats are not angled and are instead oriented parallel to the aisle. In such implementations, the seats can be positioned to be horizontally aligned with the centers of the display screens. The seats can be positioned away from the display screens by at least 15 inches, 20 inches, 25 inches, 30 inches, 35 inches, 40 inches, 45 inches, 50 inches, 15-50 inches, or any value therebetween (e.g., 27 inches). Also, typical humans have a meaningful field of vision of 140°, with approximately 30-40° considered to be the minimum field of vision angle to provide a meaningful viewing experience on a display screen. The display screens can be sized and the seats can be positioned to provide passengers with a viewing angle of at least 70°, 80°, 90°, 100°, 110°, 120°, 130°, 140°, 150°, 160°, 70-160°, or any angle therebetween (e.g., 115°). In some implementations, the seat pitch is about 28 inches, the seat angle is about 28 degrees, the height of the suite is about 50 inches, the aisle width is about 21 inches, and the foot well is at about 14 inches high.

The display screens can have various dimensions (e.g., screen size, aspect ratios). For example, the display screens can have an aspect ratio of 4:3, 16:9, 21:9, etc. The display screens can have a screen size (e.g., defined as the distance from one corner to an opposing corner, inclusive of any and all curved portions and flat portions) of 34 inches, 39 inches, 40 inches, 42 inches, 43 inches, 45 inches, 49 inches, 55 inches, 65 inches, etc. The curved portions can have a curvature radius of less than 100 millimeters (mm), 200 mm, 400 mm, 600 mm, 800 mm, 1,000 mm, 1,200 mm, 1,500 mm, 2,000 mm, 100-2,000 mm, or greater, or any curvature radius therebetween (e.g., 1,800 mm).

### Example embodiments

1. In one embodiment, an inflight entertainment system for a first passenger seat, a second passenger seat, and a third passenger seat along a passenger egress path comprising: a first curved monitor of the inflight entertainment system for an airplane, the first curved monitor having at least one central axis curvature that is substantially aligned facing the first passenger seat, the first passenger seat having at an acute angle at more than 20 degrees vertically from a horizonal alignment axis of the passenger egress path.
2. The system of example 1, further comprising a second curved monitor having at least one central axis curvature that is substantially aligned facing the second passenger seat, the second passenger seat having at an acute angle at more than 20 degrees from the horizontal alignment axis of the passenger egress path; wherein the second passenger seat is spaced apart from and horizontally aligned with the first passenger seat.
3. The system of example 2, further comprising a third curved monitor having at least one central axis curvature that is substantially aligned facing the third passenger seat, the third passenger seat having at an acute angle at more than 20 degrees vertically from a horizonal alignment axis; wherein the third passenger seat is spaced apart from and horizontally aligned with the first passenger seat and the second passenger seat.
4. The systems of example 3, wherein the first, the second, and the third passenger seats form a row in the airplane; and each row is mirror aligned along a central axis of a row in accordance with having at least one of the passenger egress paths on at least one side thereof across a span of a passenger capacity fuselage of the airplane.
5. A display for use in a commercial passenger vehicle, comprising: a curved display surface configured to face towards a passenger seat; and a back panel configured to support the curved display surface and configured to be affixed to a seatback in the commercial passenger vehicle, wherein the curved display surface comprises having a widescreen aspect ratio such that a width of the curved display surface is greater than a height of the curved display surface, wherein the curved display surface comprises multiple portions arranged along the width of the curved display surface such that each of the multiple portions has a curvature that is different from a curvature of at least one of the multiple portions. Example embodiments are depicted in FIGS. 2 to 6. Here, widescreen aspect ratio may refer to 16:9 or wider aspect ratio.
   With respect to curvatures, FIGS. 2 to 6 depict examples of a screen having two or three portions, with one portion having "infinite" radius of curvature (flat surface), the other one having about 1200 mm or less curvature (or 1400 mm or less curvature). A third portion near the window may have a radius of curvature of 100 mm or lower.
6. The display of example 5, wherein a corner portion of the multiple portion is configured to overlap with a left-side or a right-side of the passenger seat.
7. The display of example 6, wherein the corner portion has a transparency characteristic different from remaining multiple portions.
8. The display of any of above examples, wherein one of the multiple portions is a flat portion and wherein the back panel such that a portion of the back panel in direct contact with the flat portion is configured to be affixed to the seatback.
9. The display of any of examples 5-8, wherein an angular span of the curved display surface comprises at least 90 degrees. Due to the widescreen aspect ratio, the screen will occupy a large angle of the field of view of the user.
10. The display of any of above examples, wherein the curved display surface comprises organic light emitting diode (OLED) display elements. In general, any flexible display technology that allows at least some curving of the display surface may be used.
11. A method of providing curved displays on an airplane, comprising: maintaining a database comprising a plurality of entries of seat types and corresponding specification of a curvilinear shape of a surface thereof for supporting a curved display monitor; and providing, for a particular seat type, an identification of a particular curved display monitor that is suitable for installation on the surface of the particular seat type. For example, currently, the number of different seats and seatback curvatures that may be faced by an installer could run up to a hundred different configurations. In order to perform installation of the curved monitors, the installer may be able to consult the database and identify a display that is suitable for installation. At the same time, the display may be made to have certain additional pliability to allow the installer to curve the display by small amounts, e.g., 5 to 10 mm, to allow a snug fitting with the backing surface. For example, the display may comprise vertical strips of display elements (e.g., LEDs) where a guiding groove may be provided every 5 to 10 mm to allow an installer to gently bend or curve the display into a different curvature.
12. The method of example 11, wherein the particular curved display monitor is configured with a mechanism to allow local fitting adjustment, the method further including, performing, during installation of the particular curved display monitor, the local fitting adjustment, thereby causing the particular curved display monitor to maintain contact with the surface.
13. A display screen on a commercial passenger vehicle, comprising: a first portion configured to at front-center of a field of vision of a seat on the commercial passenger vehicle, the first portion having a first radius of curvature; a second portion configured to be at a front-left of the field of vision, the second portion having a second radius of curvature; and a third portion configured to be at a front-right of the field of vision, the third portion having a third radius of curvature. FIGS. 2 to 6 depict examples of such a display screen.
14. The display screen of example 13, wherein at least one of the first portion, the second portion and the third portion is convex with respect to the seat. Although the figures do not explicitly depict the convex/concave nature, one of skill in the art will appreciate that the wrapped installation of a display screen to a seatback may require the display to have an "S" shape, as an example.
15. The display screen of example 13, wherein at least one of the first portion, the second portion and the third portion is concave with respect to the seat.
16. The display screen of example 13, wherein at least one of the first portion, the second portion and the third portion is convex and another one is concave with respect to the seat.
17. The display screen of any of examples 13-16, wherein at least one of the first radius of curvature, the second radius of curvature one the third radius of curvature is less than 1200 millimeters.
18. The display screen of any of examples 13-17, wherein at least one of the second portion or the third portion comprises a material having electrically controlled transparency.
19. The display screen of any of examples 13-18, wherein the first radius of curvature is greater than the second and the third radius of curvature.
20. The display screen of any of examples 13-19, wherein one of the second portion or the third portion is positioned to occlude a passenger's view of a window of the commercial passenger vehicle.
21. The display screen of any of examples 13-19, wherein one of the second portion or the third portion is positioned as a privacy screen between the seat and a neighboring seat.
22. An Inflight entertainment system for a first passenger seat, a second passenger seat, and a third passenger seat along a passenger egress path comprising: a first curved monitor of the inflight entertainment system for an airplane, the first curved monitor having at least one central axis curvature that is substantially aligned facing the first passenger seat, the first passenger seat having at an acute angle at more than 20 degrees vertically from a horizonal alignment axis of the passenger egress path.
23. The system of example 22, further comprising a second curved monitor having at least one central axis curvature that is substantially aligned facing the second passenger seat, the second passenger seat having at an acute angle at more than 20 degrees from the horizontal alignment axis of the passenger egress path; wherein the second passenger seat is spaced apart from and horizontally aligned with the first passenger seat.
24. The system of example 23, further comprising a third curved monitor having at least one central axis curvature that is substantially aligned facing the third passenger seat, the third passenger seat having at an acute angle at more than 20 degrees vertically from a horizonal alignment axis; wherein the third passenger seat is spaced apart from and horizontally aligned with the first passenger seat and the second passenger seat.
25. The systems of example 24, wherein the first, the second, and the third passenger seats form a row in the airplane; and each row is mirror aligned along a central axis of a row in accordance with having at least one of the passenger egress paths on at least one side thereof across a span of a passenger capacity fuselage of the airplane.
26. A display for use in a commercial passenger vehicle, comprising: a curved display surface configured to face towards a passenger seat; and a back panel configured to support the curved display surface and configured to be affixed to a seatback in the commercial passenger vehicle, wherein the curved display surface comprises having a widescreen aspect ratio such that a width of the curved display surface is greater than a height of the curved display surface, wherein the curved display surface comprises multiple portions arranged along the width of the curved display surface such that each of the multiple portions has a curvature that is different from a curvature of at least one of the multiple portions.
27. The display of example 26, wherein a corner portion of the multiple portion is configured to overlap with a left-side or a right-side of the passenger seat.
28. The display of example 27, wherein the corner portion has a transparency characteristic different from remaining multiple portions.
29. The display of any of above examples, wherein one of the multiple portions is a flat portion and wherein the back panel such that a portion of the back panel in direct contact with the flat portion is configured to be affixed to the seatback.
30. The display of any of examples 26-29, wherein an angular span of the curved display surface comprises at least 90 degrees.
31. The display of any of above examples, wherein the curved display surface comprises organic light emitting diode (OLED) display elements.
32. A method of providing curved displays on an airplane, comprising: maintaining a database comprising a plurality of entries of seat types and corresponding specification of a curvilinear shape of a surface thereof for supporting a curved display monitor; and providing, for a particular seat type, an identification of a particular curved display monitor that is suitable for installation on the surface of the particular seat type.
33. The method of example 32, wherein the particular curved display monitor is configured with a mechanism to allow local fitting adjustment, the method further including, performing, during installation of the particular curved display monitor, the local fitting adjustment, thereby causing the particular curved display monitor to maintain contact with the surface.
34. A display screen on a commercial passenger vehicle, comprising: a first portion configured to at front-center of a field of vision of a seat on the commercial passenger vehicle, the first portion having a first radius of curvature; a second portion configured to be at a front-left of the field of vision, the second portion having a second radius of curvature; and a third portion configured to be at a front-right of the field of vision, the third portion having a third radius of curvature.
35. The display screen of example 34, wherein at least one of the first portion, the second portion and the third portion is convex with respect to the seat.
36. The display screen of example 34, wherein at least one of the first portion, the second portion and the third portion is concave with respect to the seat.
37. The display screen of example 34, wherein at least one of the first portion, the second portion and the third portion is convex and another one is concave with respect to the seat.
38. The display screen of any of examples 34-37, wherein at least one of the first radius of curvature, the second radius of curvature one the third radius of curvature is less than 1200 millimeters.
39. The display screen of any of examples 34-38, wherein at least one of the second portion or the third portion comprises a material having electrically controlled transparency.
40. The display screen of any of examples 34-39, wherein the first radius of curvature is greater than the second and the third radius of curvature.
41. The display screen of any of examples 34-40, wherein one of the second portion or the third portion is positioned to occlude a passenger's view of a window of the commercial passenger vehicle.
42. The display screen of any of examples 34-40, wherein one of the second portion or the third portion is positioned as a privacy screen between the seat and a neighboring seat.
43. An in-flight entertainment and communication system for a passenger vehicle having an aisle, window seats along a first side of the aisle, and center seats along a second side of the aisle, the system comprising: a plurality of display screens positioned in front of corresponding ones of the seats, wherein each display screen includes a first portion having a first curvature radius and a second portion having a second curvature radius greater than the first curvature radius, wherein the second portions of the display screens are positioned closer to the aisle than the first portions.
44. The system of claim 43, wherein the display screens are positioned such that edge portions of the display screens adjacent to the aisle are substantially perpendicular to the aisle.
45. The system of claim 43, wherein each of the window seats and the center seats is angled by at least 15° relative to the aisle to face a center of the corresponding display screen.
46. The system of claim 43, wherein each of the display screens has a screen size and is spaced apart from the corresponding seat to provide a viewing angle of 140-160°.
47. The system of claim 43, wherein each of the display screens is configured to simultaneously display a first content on the first portion and a second content distinct from the first content on the second portion.
48. The system of claim 47, wherein the first content includes at least one of a menu, weather information, an itinerary, a schedule, or a map, and wherein the second content includes at least one a multimedia content or flight tracking information.
49. The system of claim 43, wherein the center seats are positioned on either side of a partition wall extending parallel to the aisle, and wherein the first portions of the display screens in the center seats face away from the partition walls.
50. The system of claim 43, wherein the second portions of the display screens in the window seats at least partially cover corresponding windows in the window seats, and optionally a transparency of the second portions is adjustable to at least partially hide or reveal the windows.
51. The system of claim 43, wherein the second curvature radius is infinity such that the second portions are substantially flat.
52. The system of claim 51, wherein the substantially flat second portions are mounted on and parallel to partition walls separating seats in adjacent rows and in a column.
53. A display screen for use in a passenger vehicle, the display screen comprising: a first portion having a first curvature radius; and a second portion having a second curvature radius greater than the first curvature radius, wherein the first and second portions form a continuous screen, wherein the display screen is configured to be installed in the passenger vehicle such that the second portion is positioned closer to an adjacent aisle than the first portion.
54. The display screen of claim 53, wherein the first curvature radius is between 800-1,200 millimeters.
55. The display screen of claim 53, wherein the second curvature radius is infinity such that the second portion is substantially flat.
56. The display screen of claim 53, wherein the display screen has a screen size of 45 inches, wherein the first curvature radius is 1,200 millimeters, and wherein the second curvature radius is infinity such that the second portion is substantially flat.
57. The display screen of claim 53, wherein the display screen has a screen size of between 34-39 inches, wherein the first curvature radius is 800 millimeters, and wherein the second curvature radius is infinity such that the second portion is substantially flat.
58. The display screen of claim 53, wherein the first portion and the second portion are arranged laterally such that the display screen curves along a lateral axis.
59. The display screen of claim 53, wherein the first portion and the second portion are arranged vertically such that the display screen curves along a vertical axis.
60. The display screen of claim 53, wherein the display screen includes Organic Light-Emitting Diode (OLED) display elements.
61. A method for arranging and installing display screens on a commercial vehicle, the method comprising: accessing a database storing a first list of seats on the commercial vehicle and a second list of curved display screens available to be installed on the commercial vehicle, wherein the first list includes, for each seat, at least one of a seat type, dimensions of the seat, or position of the seat relative to an aisle in the commercial vehicle, wherein the second list includes, for each curved display screen, at least one of a shape, a screen size, or a display technology type; and identifying, for each seat in the first list, a corresponding curved display screen included in the second list based on at least one of the seat type, the dimensions of the seat, the position of the seat relative to an aisle in the commercial vehicle and at least one of the shape, the screen size, or the display technology type of the curved display screen.
62. The method of claim 61, further comprising: installing the identified curved display screens at the corresponding seats such that the curved display screens curve away from adjacent aisles.

It will be appreciated that the present document discloses methods, systems, apparatus for providing curved display screens on a commercial passenger vehicle. In one example aspect, a multi-sectional curved display screen is provided, with each section (or portion) having a different radius of curvature that may be flat, or may be less than a threshold. This threshold is typically smaller than commercial computer monitors and may be for example 1200 to 1400 mm radius.

It will further be appreciated that the wide screen display format provides additional display surface for the IFEC system to concurrently display multimedia programs and menus or weather and map information without having to overlay. It will further be appreciated that the wraparound nature of the display screen makes it possible to provide a privacy function. In particular, the opacity or transparency of the display may be controllable using a user control, thus allowing the same surface to be used as a multimedia display or a transparent surface.

It will further be appreciated that the present document discloses two techniques to allow installation of flexible displays on airplanes. Using the first technique, an installer is able to identify a right type of display screen for any given seat currently found on airplanes. Using the second technique, the installer may be able to make minor local adjustments to allow the display to fit in place. Here, the installer may be able to flexibly bend the display to have a desired curvature.

Some of the embodiments described herein are described in the general context of methods or processes, which may be implemented in one embodiment by a computer program product, embodied in a computer-readable medium, including computer-executable instructions, such as program code, executed by computers in networked environments. A computer-readable medium may include removable and non-removable storage devices including, but not limited to, Read Only Memory (ROM), Random Access Memory (RAM), compact discs (CDs), digital versatile discs (DVD), etc. Therefore, the computer-readable media can include a non-transitory storage media. Generally, program modules may include routines, programs, objects, components, data structures, etc. that perform particular tasks or implement particular abstract data types. Computer- or processor-executable instructions, associated data structures, and program modules represent examples of program code for executing steps of the methods disclosed herein. The particular sequence of such executable instructions or associated data structures represents examples of corresponding acts for implementing the functions described in such steps or processes.

Some of the disclosed embodiments can be implemented as devices or modules using hardware circuits, software, or combinations thereof. For example, a hardware circuit implementation can include discrete analog and/or digital components that are, for example, integrated as part of a printed circuit board. Alternatively, or additionally, the disclosed components or modules can be implemented as an Application Specific Integrated Circuit (ASIC) and/or as a Field Programmable Gate Array (FPGA) device. Some implementations may additionally or alternatively include a digital signal processor (DSP) that is a specialized microprocessor with an architecture optimized for the operational needs of digital signal processing associated with the disclosed functionalities of this application. Similarly, the various components or sub-components within each module may be implemented in software, hardware or firmware. The connectivity between the modules and/or components within the modules may be provided using any one of the connectivity methods and media that is known in the art, including, but not limited to, communications over the Internet, wired, or wireless networks using the appropriate protocols.

While this document contains many specifics, these should not be construed as limitations on the scope of an invention that is claimed or of what may be claimed, but rather as descriptions of features specific to particular embodiments. Certain features that are described in this document in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations and even initially claimed as such, one or more features from a claimed combination can in some cases be excised from the combination, and the claimed combination may be directed to a sub-combination or a variation of a sub-combination. Similarly, while operations are depicted in the drawings in a particular order, this should not be understood as requiring that such operations be performed in the particular order shown or in sequential order, or that all illustrated operations be performed, to achieve desirable results.

Only a few implementations and examples are described and other implementations, enhancements and variations can be made based on what is described and illustrated in this patent document.

## Claims

1. A display screen for use in a passenger vehicle, the display screen comprising:
a first portion configured to be at a front-center of a field of vision of a seat on the passenger vehicle, the first portion having a first curvature radius;
a second portion configured to be at a front-left of the field of vision, the second portion having a second curvature radius; and
a third portion configured to be at a front-right of the field of vision, the third portion having a third curvature of radius;
wherein the display screen includes Organic Light-Emitting Diode (OLED) display elements.

2. The display screen of claim 1, wherein at least one of the first portion, the second portion, or the third portion is convex with respect to the seat.

3. The display screen of claim 1, wherein the display screen has a screen size of 45 inches, wherein the second curvature radius is less than 1,200 millimeters, and wherein the first curvature radius is infinity such that the first portion is substantially flat.

4. The display screen of claim 1, wherein the display screen has a screen size of between 34-39 inches, wherein the first curvature radius is 800 millimeters, and wherein the second curvature radius is infinity such that the second portion is substantially flat.

5. The display screen of claim 1, wherein the first portion and the second portion are arranged laterally such that the display screen curves along a lateral axis, or wherein the first portion and the second portion are arranged vertically such that the display screen curves along a vertical axis.

6. The display screen of claim 1, wherein a transparency of at least one of the first portion, the second portion, or the third portion is configured to be adjusted based on user inputs or sensor outputs.

7. An in-flight entertainment and communication system for a passenger vehicle having an aisle, window seats along a first side of the aisle, and center seats along a second side of the aisle, the system comprising:
a plurality of display screens as recited in claim 1 positioned in front of corresponding ones of the seats,
wherein the second portions of the display screens are positioned closer to the aisle than the first portions.

8. The system of claim 7, wherein the display screens are positioned such that edge portions of the display screens adjacent to the aisle are substantially perpendicular to the aisle.

9. The system of claim 7, wherein each of the window seats and the center seats is angled by at least 15° relative to the aisle to face a center of the corresponding display screen.

10. The system of claim 7, wherein each of the display screens has a screen size and is spaced apart from the corresponding seat to provide a viewing angle of 140-160°.

11. The system of claim 7, wherein each of the display screens is configured to simultaneously display a first content on the first portion and a second content distinct from the first content on the second portion wherein the first content includes at least one of a menu, weather information, an itinerary, a schedule, or a map, and wherein the second content includes at least one a multimedia content or flight tracking information.

12. The system of claim 7, wherein the center seats are positioned on either side of a partition wall extending parallel to the aisle, and wherein the first portions of the display screens in the center seats face away from the partition walls.

13. The system of claim 7, wherein the second portions of the display screens in the window seats at least partially cover corresponding windows in the window seats, and wherein a transparency of the second portions is adjustable to at least partially hide or reveal the windows.

14. The system of claim 7, wherein the second curvature radius is infinity such that the second portions are substantially flat.

15. The system of claim 14, wherein the substantially flat second portions are mounted on and parallel to partition walls separating seats in adjacent rows and in a column.
